(19) **Europäisches Patentamt / European Patent Office / Office européen des brevets**

(11) **EP 4 522 435 B1**

(12) **FASCICULE DE BREVET EUROPEEN**

(45) Date de publication et mention de la délivrance du brevet:
**18.03.2026 Bulletin 2026/12**

(21) Numéro de dépôt: **23722878.8**

(22) Date de dépôt: **27.04.2023**

(51) Classification Internationale des Brevets (IPC):
***B60H 1/00*** *(2006.01)*

(52) Classification Coopérative des Brevets (CPC):
**B60H 1/00785; B60H 1/0073**

(86) Numéro de dépôt international:
**PCT/EP2023/061164**

(87) Numéro de publication internationale:
**WO 2023/217549 (16.11.2023 Gazette 2023/46)**

(54) **PROCÉDÉ ET SYSTÈME DE RÉGULATION DE LA PRÉSENCE DE BUÉE SUR AU MOINS UN VITRAGE D'UN VÉHICULE**

VERFAHREN UND SYSTEM ZUR REGELUNG DES BESCHLAGENS AUF DER INNENFLÄCHE MINDESTENS EINER VERGLASUNGSEINHEIT EINES FAHRZEUGS

METHOD AND SYSTEM FOR REGULATING THE PRESENCE OF FOGGING ON THE INTERIOR SURFACE OF AT LEAST ONE GLAZING UNIT OF A VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.05.2022 FR 2204381**

(43) Date de publication de la demande:
**19.03.2025 Bulletin 2025/12**

(73) Titulaire: **Saint-Gobain Sekurit France**
**60150 Thourotte (FR)**

(72) Inventeurs:
• **XU, Xuejuan**
**92400 COURBEVOIE (FR)**
• **PANDRAUD, Guillaume**
**92400 COURBEVOIE (FR)**

(74) Mandataire: **Saint-Gobain Recherche**
**41 Quai Lucien Lefranc**
**93300 Aubervilliers (FR)**

(56) Documents cités:
FR-A1- 3 048 214     US-A1- 2019 176 568
US-A1- 2021 394 580     US-B2- 9 758 008

EP 4 522 435 B1

**Description**

**Technique antérieure**

La présente invention appartient au domaine général de la gestion de l'état d'un ou plusieurs vitrages de véhicules, tels que les voitures, les camions, les autobus, les trains et similaires. Elle concerne plus particulièrement un procédé de régulation de la présence de buée sur au moins un vitrage d'un véhicule. Elle concerne également un système configuré pour mettre en œuvre ledit procédé. L'invention trouve une application particulièrement avantageuse, bien que nullement limitative, dans le cas d'un véhicule comportant au moins un moteur électrique pour se mouvoir, comme par exemple un véhicule électrique ou hybride.

La gestion du risque de condensation d'humidité, et donc a fortiori de présence de buée, sur la surface intérieure du pare-brise d'un véhicule revêt une importance particulière en termes de sécurité des utilisateurs dudit véhicule. En effet, la présence de buée sur le pare-brise a une influence directe sur le confort visuel du conducteur du véhicule, étant attendu que celui-ci dispose d'un champ de vision le plus étendu et le plus dégagé possible afin d'éviter toute gêne/fatigue visuelle préjudiciable à la sécurité de conduite dudit véhicule.

En pratique, la gestion de ce risque de condensation peut se révéler complexe dans la mesure où elle est susceptible de rentrer en conflit avec la gestion du confort thermique au sein de l'habitacle, ce dernier se définissant traditionnellement comme une combinaison entre , notamment, la température ressenti par le ou les utilisateurs du véhicule, étant attendu que celle-ci atteigne une valeur donnée (exemple : une température déterminée par le conducteur) au sein dudit habitacle, et l'humidité relative ou absolue au sein dudit habitacle.

En effet, pour atteindre un confort thermique donné, il est traditionnellement fait usage d'un système de contrôle climatique, encore appelé système « HVAC » (acronyme de l'expression anglo-saxonne « Heating, Ventilation, and Air Conditioning ») permettant de chauffer, refroidir et ventiler l'air circulant dans l'habitable.

Toutefois, dans beaucoup de véhicules actuels, ce système HVAC est également utilisé pour gérer le risque de buée sur le pare-brise, au point que celui-ci est même prioritaire sur la gestion du confort thermique. Cela peut donc mener à des situations problématiques, comme par exemple en hiver où le système HVAC ne peut pas être utilisé pour gérer le risque de buée sans introduire de l'air froid et/ou activer un circuit de refroidissement, ce qui entraîne alors une dégradation du confort thermique, voire également une augmentation de la consommation d'énergie électrique embarquée dans le véhicule.

Pour pallier cette difficulté, il a été proposé d'équiper le pare-brise de moyens de chauffage dédiés (exemple : éléments résistifs de type fils ou bandes métalliques, couche intercalaire chauffante d'un vitrage feuilleté, etc.).

De tels moyens de chauffage permettent de désembuer le pare-brise de manière efficace, celui-ci étant en effet directement chauffé avec une faible perte de chaleur au niveau de son voisinage, ce qui permet d'accroître la marge de manœuvre en termes d'optimisation de la gestion thermique de l'habitacle.

Cela étant, lesdits moyens de chauffage sont généralement commandés par un commutateur marche/arrêt, opéré par un utilisateur du véhicule (exemple : conducteur du véhicule). Cette utilisation des moyens de chauffage ne peut dès lors pas être considérée comme satisfaisante puisqu'elle résulte d'une action volontaire de l'utilisateur, c'est-à-dire d'une action basée sur un critère subjectif. Ainsi, il peut arriver que les moyens de chauffage soient laissés en marche par simple oubli de l'utilisateur, ce qui a assurément un impact négatif en termes de consommation énergétique.

Une façon d'essayer de pallier ces inconvénients consiste notamment à réaliser un contrôle automatique de la gestion de la buée sur le pare-brise du véhicule. Un tel contrôle automatique est souvent réalisé au moyen d'une boucle de contrôle fermée utilisant des données provenant de capteurs de température et/ou d'humidité. Sur la base de ces données, les moyens de chauffage sont commandés en essayant de réduire le risque de condensation sur le pare-brise.

Les solutions actuelles proposant un contrôle automatique en boucle fermée s'appuient sur des techniques traditionnelles de régulation de type PID (acronyme de l'expression « proportionnel, intégral, dérivé »), et se révèlent finalement peu satisfaisantes car peu propices à une évaluation fiable du risque de condensation sur le pare-brise du véhicule, ainsi qu'à une régulation précise de celui-ci. Un procédé de régulation d'un type connu est divulgué par FR 3 048 214 A1.

Il importe de noter que l'ensemble des éléments exposés ci-avant s'applique en définitive pour tout type de vitrage d'un véhicule, donc en particulier pour des vitrages autres qu'un pare-brise (exemple : lunette arrière, vitre latérale, etc.).

**Exposé de l'invention**

La présente invention a pour objectif de remédier à tout ou partie des inconvénients de l'art antérieur, notamment ceux exposés ci-avant, en proposant une solution qui permette de réguler (contrôler) automatiquement la présence de buée sur un ou plusieurs vitrages d'un véhicule, de manière plus précise et plus efficace que les solutions de l'état de la technique.

A cet effet, et selon un premier aspect, l'invention concerne un procédé de régulation de la présence de buée sur la surface intérieure d'au moins un vitrage d'un véhicule, ledit procédé comportant une boucle de contrôle comprenant, lors d'une itération courante, des étapes de :

- obtention d'au moins un signal, dit « signal de contrôle », associé à une grandeur et comportant des valeurs passées et une valeur courante de ladite grandeur, un risque de condensation d'humidité sur la surface intérieure dudit au moins un vitrage pouvant être déterminé à partir de ladite au moins une grandeur,
- détermination d'une commande prédictive d'au moins un actionneur du véhicule de sorte à maintenir ou abaisser ledit risque en-dessous d'une valeur seuil, ladite commande étant déterminée au moyen d'un modèle prédictif dudit risque utilisant ledit au moins un signal de contrôle,
- transmission de la commande prédictive audit au moins un actionneur.

Par « commande prédictive », il est fait référence ici à une commande visant à activer/désactiver les moyens de chauffage et/ou activer/désactiver au moins un composant appartenant au système de climatisation de sorte à réguler la présence de buée sur ledit au moins un vitrage.

Il est à noter que l'expression « réguler la présence de buée sur ledit au moins un vitrage » couvre plusieurs cas, à savoir :

- les cas où aucune buée n'est déjà présente sur ledit au moins un vitrage, la régulation en question visant alors à empêcher l'apparition de buée,
- les cas où de la buée est déjà présente sur ledit au moins un vitrage, la régulation en question visant alors à l'éliminer.

Par ailleurs, et de manière plus particulière, le terme « prédictive » fait référence à une commande de type compensation/correction anticipatrice. Une telle commande prédictive relève d'une technique de commande avancée de l'automatique (les acronymes « MPC » ou « MBPC » sont couramment utilisés en anglais pour qualifier cette technique, et correspondent aux expressions « Model (Based) Predictive Control »).

Dans son principe général, une technique MPC consiste en l'utilisation d'au moins un modèle alimenté par des signaux. Ledit au moins un modèle permet de décrire l'évolution d'une ou plusieurs grandeurs, dont notamment des grandeurs associées aux signaux qui sont fournis en entrée dudit au moins un modèle, afin d'anticiper l'évolution future des grandeurs en question, et ainsi prévoir quelles sont les commandes les plus appropriées à transmettre en fonction de cette évolution.

La mise en œuvre d'une telle technique MPC se révèle particulièrement adaptée à l'application envisagée ici, c'est-à-dire la régulation de la présence de buée sur ledit au moins un vitrage du véhicule. En effet, la technique MPC permet de créer un effet anticipatif vis-à-vis des signaux de contrôle, de sorte à pouvoir générer des commandes de régulation adaptées à l'évolution (sur un horizon temporel futur déterminé) des grandeurs associées aux signaux de contrôle.

Elle permet en outre d'éviter des variations excessives des grandeurs manipulées (i.e. la commande prédictive est plus douce), ce qui contribue à une meilleure utilisation des actionneurs (moyens de chauffage, système de climatisation).

En définitive, la mise en œuvre du procédé de régulation selon l'invention permet avantageusement de réguler de manière fine la présence de buée sur ledit au moins un vitrage, de sorte notamment à minimiser le risque d'apparition de buée, ou bien encore, si de la buée est déjà présente, à privilégier une élimination rapide de celle-ci pour des raisons de sécurité de conduite.

Dans des modes particuliers de mise en œuvre, le procédé de régulation peut comporter en outre l'une ou plusieurs des caractéristiques suivantes, prises isolément ou selon toutes les combinaisons techniquement possibles.

Dans des modes particuliers de mise en œuvre, une pluralité de signaux de contrôle sont obtenus, dont :

- un signal dont la grandeur associée est une température dudit au moins un vitrage, et
- un signal dont la grandeur associée est une humidité absolue au sein de l'habitacle du véhicule.

Dans des modes particuliers de mise en œuvre, un seul signal de contrôle est obtenu, la grandeur associée audit signal de contrôle étant une humidité relative à l'intérieur du véhicule au voisinage dudit au moins un vitrage.

Par « au voisinage dudit au moins un vitrage », il est fait référence ici à un écart au pare-brise de l'ordre de quelques millimètres, par exemple inférieure ou égale à 10 mm.

Dans des modes particuliers de mise en œuvre, la détermination dudit risque de condensation, par le modèle prédictif et pour un pas de temps donné d'un horizon temporel futur, comporte :

- une obtention d'une température dudit au moins un vitrage ainsi que d'un point de rosée de l'habitacle,

- un calcul d'un écart entre ladite température dudit au moins un vitrage et ledit point de rosée de l'habitacle,
- une comparaison dudit écart avec au moins une valeur donnée.

Dans des modes particuliers de mise en œuvre, la détermination dudit risque de condensation, par le modèle prédictif et pour un pas de temps donné d'un horizon temporel futur, comporte :

- une obtention d'une humidité relative à l'intérieur du véhicule au voisinage dudit au moins un vitrage,
- une comparaison de ladite humidité relative avec au moins une valeur donnée.

Dans des modes particuliers de mise en œuvre, ledit au moins actionneur comporte des moyens de chauffage dudit au moins un vitrage et/ou au moins un actionneur d'un système de climatisation de l'habitacle du véhicule parmi : un ventilateur, un compresseur, une résistance chauffante, un volet de recyclage d'air.
Dans des modes particuliers de mise en œuvre, le modèle prédictif est configuré pour modéliser :

- l'évolution de conditions de température et d'humidité au niveau de la surface intérieure dudit au moins un vitrage, et
- l'évolution de conditions de température et d'humidité au sein de l'habitacle du véhicule en raison du fonctionnement d'un système de climatisation dudit habitacle.

Dans des modes particuliers de mise en œuvre, le procédé de régulation comporte également une étape d'obtention d'au moins un signal, dit « signal de perturbation », associé à une grandeur et comportant des valeurs passées et une valeur courante de ladite grandeur, ledit au moins un signal de perturbation étant au moins l'un parmi :

- un signal dont la grandeur associée est un nombre de personnes dans le véhicule,
- un signal dont la grandeur associée est un taux de dioxyde de carbone présent dans l'habitacle,
- un signal dont la grandeur associée est une vitesse du véhicule,
- un signal dont la grandeur associée est une température extérieure au véhicule,
- un signal dont la grandeur associée est une humidité relative ou absolue extérieure au véhicule,
- un signal dont la grandeur associée est une donnée de prédiction météorologique,
- un signal dont la grandeur associée est une puissance solaire absorbée par ledit au moins un vitrage et/ou par l'habitacle du véhicule.

Le procédé de régulation comporte en outre une étape de détermination, à partir dudit au moins un signal de perturbation, d'au moins une valeur prédite de la grandeur associée audit au moins signal de perturbation,
le modèle prédictif dudit risque de condensation utilisant également ladite au moins valeur prédite lors de la détermination de la commande prédictive dudit au moins un actionneur.
De telles dispositions permettent avantageusement de prendre en considération des perturbations mesurables susceptibles d'affecter la commande prédictive. Il en résulte donc une très grande réactivité, en termes de régulation, vis-à-vis de conditions externes au véhicule, mais également une possibilité d'affiner (i.e. d'enrichir) le modèle prédictif, et donc a fortiori d'augmenter encore plus la précision de la régulation.
Dans des modes particuliers de mise en œuvre, l'étape de détermination de la commande prédictive comporte une optimisation d'une fonction coût comportant au moins un terme parmi :

- un écart entre le risque de condensation prédit par le modèle prédictif et ladite valeur seuil,
- un taux de variation du risque de condensation.

Dans des modes particuliers de mise en œuvre, la fonction coût comporte également une pondération d'au moins un terme représentatif d'un critère d'utilisation du véhicule, ledit au moins un critère d'utilisation comportant au moins l'un parmi :

- un critère relatif à une absence de givre sur ledit au moins un vitrage,
- un critère relatif à un confort thermique au sein de l'habitacle,
- un critère relatif à une consommation d'énergie électrique embarquée dans le véhicule et utilisée pour le fonctionnement dudit au moins un actionneur,
- un critère relatif à un taux de dioxyde de carbone au sein de l'habitacle,
- un critère relatif à un niveau de bruit au sein de l'habitacle.

Selon un deuxième aspect, l'invention concerne un programme d'ordinateur comportant des instructions pour la mise en œuvre d'un procédé de régulation selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un troisième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement, par exemple une clé USB ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un quatrième aspect, l'invention concerne un système de régulation de la présence de buée sur au moins un vitrage d'un véhicule. Ledit système comporte des moyens configurés pour mettre en œuvre un procédé de régulation selon l'invention.

Selon un cinquième aspect, l'invention concerne un véhicule comportant un système de régulation selon l'invention.

Dans des modes particuliers de réalisation, ledit véhicule comporte au moins un moteur électrique pour se mouvoir.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement, dans son environnement, un mode particulier de réalisation d'un système de régulation selon l'invention, ledit système de régulation étant configuré pour réguler la présence de buée sur le pare-brise d'un véhicule ;

[Fig. 2] la figure 2 représente schématiquement un exemple d'architecture matérielle du système de régulation de la figure 1 ;

[Fig. 3] la figure 3 représente schématiquement un mode particulier de fonctionnement d'une boucle de contrôle mise en œuvre par le système de contrôle de la figure 1 pour réguler la présence de buée ;

[Fig. 4] la figure 4 représente, sous forme d'ordinogramme, un mode particulier de mise en œuvre d'un procédé de contrôle intégrant la boucle de contrôle de la figure 3 ;

[Fig. 5] la figure 5 représente schématiquement un mode particulier de réalisation d'un module de régulation appartenant au système de régulation de la figure 1 et utilisé pour le fonctionnement de la boucle de contrôle de la figure 3 ;

[Fig. 6] la figure 6 un autre mode particulier de fonctionnement de la boucle de contrôle ;

[Fig. 7] la figure 7 représente, sous forme d'ordinogramme, un mode particulier de mise en œuvre du procédé de régulation intégrant la boucle de contrôle de la figure 6.

## Description de modes de réalisation

La présente invention appartient au domaine de la gestion de l'état d'un ou plusieurs vitrages d'un véhicule, et vise plus spécifiquement la régulation (i.e. le contrôle) du risque de condensation d'humidité (i.e. du risque de présence de buée) sur un ou plusieurs vitrages dudit véhicule.

La suite de la description vise plus particulièrement un véhicule de type voiture électrique. Par « voiture électrique », on fait référence ici à une voiture qui comporte au moins un moteur électrique et qui, pour se mouvoir (i.e. pour faire fonctionner ledit au moins un moteur électrique), utilise uniquement l'énergie électrique embarquée dans une ou plusieurs batteries qui l'équipent.

Pour des raisons de simplification de la description, on considère également de manière nullement limitative que la régulation mentionnée ci-avant s'applique uniquement au pare-brise de ladite voiture électrique.

Il importe toutefois de noter que la présente invention ne se limite pas au cas d'une voiture électrique, et peut concerner indifféremment une voiture hybride ou bien encore une voiture uniquement équipée d'un moteur à combustion.

De manière plus générale, le fait de considérer un véhicule de type voiture ne constitue pas une limitation de l'invention, cette dernière restant applicable pour tout type de véhicule susceptible de se déplacer au moyen d'une énergie embarquée (énergie électrique et/ou carburant), tel qu'un camion, un autobus, un train, etc. et comportant au moins un vitrage.

De plus, le fait de décrire ici l'invention pour le seul pare-brise de la voiture électrique ne constitue qu'une variante d'implémentation de l'invention. Ainsi, aucune limitation n'est attachée à ces aspects, si bien qu'il est possible de considérer d'autres vitrages, comme par exemple une vitre latérale ou bien une lunette arrière d'une voiture. Rien n'exclut non plus de considérer une régulation de présence de buée pour une pluralité de vitrages.

En définitive, quel que soit le type de véhicule considéré et quel que soit le type et le nombre de vitrages considérés, l'homme du métier sait adapter sans difficulté la description qui suit.

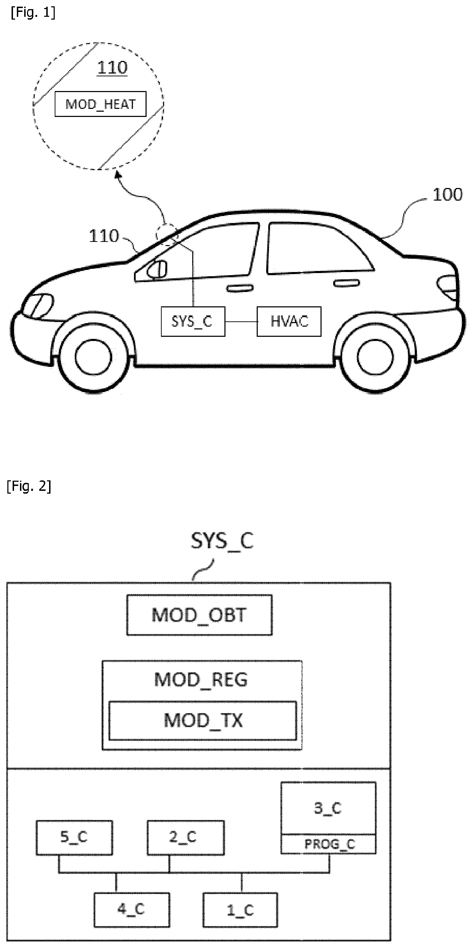

La figure 1 représente schématiquement, dans son environnement, un mode particulier de réalisation d'un système SYS_C de régulation de la présence de buée sur le pare-brise 110 de la voiture électrique 100.

Dans le mode de réalisation de la figure 1, le système SYS_C de régulation est connecté, via des moyens de communication décrits plus en détail ultérieurement, à un système HVAC (acronyme de l'expression anglo-saxonne « Heating, Ventilation, and Air Conditioning ») équipant la voiture électrique 100.

De manière conventionnelle, ledit système HVAC est configuré pour chauffer, refroidir et ventiler l'habitacle du véhicule équipant la voiture électrique 100. Les détails de conception et d'implémentation d'un tel système HVAC étant bien connus de l'homme du métier, ils ne sont pas rappelés ici.

Par ailleurs, dans le mode de réalisation décrit ici, en vue de réaliser le contrôle du désembuage du pare-brise 110, ledit système SYS_C est également connecté à des moyens de chauffage MOD_HEAT équipant le pare-brise 110.

Lesdits moyens de chauffage MOD_HEAT comprennent par exemple un réseau de fils électriques incorporé au pare-brise 110 (cas d'un vitrage feuilleté comprenant une couche dans laquelle sont insérés lesdits fils électriques). D'une manière générale, tous les moyens de chauffe connus peuvent être envisagés, cet aspect n'étant pas limitatif de l'invention.

La régulation de présence de buée sur le pare-brise 110 de la voiture électrique 100 s'effectue donc, dans le mode de réalisation décrit ici, grâce auxdits moyens de chauffe MOD_HEAT ainsi que grâce audit système de climatisation HVAC. Il importe toutefois de noter que de telles dispositions ne sont pas limitatives de l'invention, seuls lesdits moyens de chauffe MOD_HEAT (respectivement seul ledit système de climatisation HVAC) pouvant par exemple être utilisés pour réguler la présence de buée sur le pare-brise 110.

Ainsi, lesdits moyens de chauffe MOD_HEAT forment des actionneurs (« actuator » en anglais) vis-à-vis de la régulation envisagée. Il en est de même du ou des composants du système de climatisation HVAC pouvant être sollicités dans la mise en œuvre de cette régulation, comme par exemple : un ventilateur et/ou un compresseur et/ou une résistance chauffante (comme par exemple une résistance chauffante équipant un siège chauffant ou un panneau radiant de la voiture 100) et/ou un volet de recyclage d'air, etc.

Conformément à l'invention, le système SYS_C est configuré pour réaliser des traitements permettant de réguler (i.e. contrôler) la présence de buée sur la surface intérieure du pare-brise 110 de la voiture électrique 100 (i.e. la surface en contact direct avec l'environnement intérieur de la voiture 100, i.e. l'habitacle de la voiture 100). Autrement dit, ledit système SYS_C est configuré pour générer des commandes de régulation destinées aux moyens de chauffe MOD_HEAT ainsi qu'au système de climatisation HVAC, en mettant en œuvre un procédé de régulation selon l'invention, décrit en détail ci-après et dont les étapes sont incluses dans une boucle de contrôle (fermée).

La mise en œuvre de ce procédé de régulation, via ledit système de régulation SYS_C, permet avantageusement de contrôler de manière fine le risque de condensation, et donc de présence de buée, sur le pare-brise 110 de la voiture électrique 100, de sorte à garantir un excellent confort de conduite, notamment au regard d'exigences de sécurité liées à la visibilité au travers dudit pare-brise 110.

La figure 2 représente schématiquement un exemple d'architecture matérielle du système de régulation SYS_C de la figure 1.

Tel qu'illustré par la figure 2, le système de régulation SYS_C selon l'invention dispose de l'architecture matérielle d'un ordinateur. Ainsi, ledit système de régulation SYS_C comporte, notamment, un processeur 1_C, une mémoire vive 2_C, une mémoire morte 3_C et une mémoire non volatile 4_C. Il dispose en outre de moyens de communication 5_C.

La mémoire morte 3_C du système de régulation SYS_C constitue un support d'enregistrement conforme à l'invention, lisible par le processeur 1_C et sur lequel est enregistré un programme d'ordinateur PROG_C conforme à l'invention, comportant des instructions pour l'exécution d'étapes du procédé de régulation selon l'invention. Le programme PROG_C définit des modules fonctionnels du système de régulation SYS_C, qui s'appuient ou commandent les éléments matériels 1_C à 5_C cités précédemment, et qui comprennent notamment :

- un module d'obtention MOD_OBT configuré pour obtenir au moins un signal, dit « signal de contrôle », associé à une grandeur et comportant des valeurs passées et une valeur courante de ladite grandeur, un risque RI de condensation d'humidité sur la surface intérieure du pare-brise 110 pouvant être déterminé à partir de ladite au moins une grandeur,
- un module de régulation MOD_REG configuré pour déterminer une commande prédictive C_PRED des actionneurs desdits moyens de chauffe MOD_HEAT et dudit système de climatisation HVAC, de sorte à maintenir ou abaisser ledit risque RI en-dessous d'une valeur seuil VS_RI, ladite commande étant déterminée au moyen d'un modèle prédictif MODEL dudit risque RI,
- un module de transmission MOD_TX configuré pour transmettre la commande prédictive C_PRED auxdits actionneurs.

De manière connue, le phénomène de condensation sur le pare-brise 110 peut se produire lorsque l'une quelconque des assertions ci-dessous est vérifiée :

- l'humidité relative atteint 100 % au voisinage du pare-brise 110 ;
- la température de l'air au voisinage du pare-brise 110 atteint le point de rosée ;
- la pression partielle de l'eau au voisinage du pare-brise 110 atteint la pression de vapeur de saturation.

Ces trois assertions sont équivalentes en ce qu'elles traduisent chacune le fait que si la masse de l'eau présente dans l'habitacle de la voiture 100 au voisinage du pare-brise 110 est supérieure à ce que l'air peut contenir sous forme de vapeur dans ce voisinage, alors de la condensation peut apparaître sur la surface intérieure du pare-brise 110.

Il résulte de ces considérations, et plus particulièrement de l'équivalence entre lesdites assertions, qu'il est possible de définir le risque de condensation RI en fonction de différents ensembles de grandeurs physiques (un ensemble pouvant faire référence à une ou plusieurs grandeurs), ce qui conditionne alors différents modes de réalisation de l'invention au regard des signaux de contrôle destinés à être obtenus via ledit module d'obtention MOD_OBT.

Les signaux de contrôle sont par exemple associés à des grandeurs contrôlables, i.e. des grandeurs sur lesquelles il est possible d'agir. En particulier, par exemple, un signal associé à une grandeur relative à une température extérieure à la voiture ne forme pas un signal de contrôle.

Aussi, dans le mode de réalisation décrit ici, on considère que deux signaux de contrôle sont obtenus (étant entendu que chaque signal de contrôle est représentatif d'une seule grandeur), qui sont :

- un signal S_T_WS dont la grandeur associée est une température T_WS du pare-brise 110. Il est à noter que par « température T_WS du pare-brise 110 », il est fait référence, pour le présent mode de réalisation, à une température au niveau de la surface intérieure du pare-brise 110,
- un signal S_AH_CAB dont la grandeur associée est une humidité absolue AH_CAB au sein de l'habitacle de la voiture 100. De manière connue en soi, l'humidité absolue AH_CAB correspond à la proportion en poids de vapeur d'eau présente dans l'air contenue dans ledit voisinage du pare-brise 110.

A partir desdits deux signaux de contrôle S_T_WS, S_AH_CAB, et sur la base de calculs connus de l'homme de l'art, il est possible de déterminer (i.e. d'estimer), dans un premier temps, un point de rosée DP_CAB de l'habitacle de la voiture 100 (i.e. la température en dessous de laquelle la vapeur d'eau contenue dans l'air de l'habitacle se condense sur les surfaces, par effet de saturation).

Dès lors, et dans un deuxième temps, le risque RI de condensation d'humidité sur la surface intérieure du pare-brise 110 peut être évalué en considérant un indicateur de risque I1_RI égal à la différence entre les grandeurs T_WS et DP_CAB (i.e. I1_RI = T_WS - DP_CAB). Plus particulièrement, on considère par exemple que :

- si I1_RI est inférieur à une première valeur T_INF, le risque RI est égal à 100% ;
- si I1_RI est supérieur à une deuxième valeur T_SUP (T_SUP étant supérieure à T_INF), le risque RI est nul ;
- si I1_RI est compris entre T_INF et T_SUP (i.e. T_INF < I1_RI < T_SUP), le risque RI s'exprime de la façon suivante :

[Math 1]

$$RI = A \times \left( \frac{I1\_RI - T\_INF}{T\_SUP - T\_INF} \right)^{n}$$

expression dans laquelle A et n sont deux coefficients donnés.

Il est à noter qu'aucune limitation n'est attachée au choix des paramètres T_INF, T_SUP, A et n. En pratique, ces paramètres sont traditionnellement fixés lors de la fabrication de la voiture 100.

Par ailleurs, le fait de considérer une telle valeur de RI, lorsque ledit indicateur I1_RI est compris entre T_INF et T_SUP, ne constitue qu'une variante d'implémentation de l'invention. Toute autre variante connue de l'homme du métier peut être ici utilisée lorsqu'il est considéré que le risque RI est déterminé à partir dudit indicateur de risque I1_RI.

De manière plus générale, il importe de noter que la prise en compte desdits deux signaux de contrôle S_T_WS, S_AH_CAB pour déterminer le risque RI, et donc in fine pour mettre en œuvre la régulation, n'est pas limitatif de l'invention.

En effet, rien n'exclut par exemple de considérer d'autres modes de réalisation dans lesquels un seul signal de contrôle est obtenu par le module d'obtention MOD_OBT, à savoir, par exemple, un signal S_RH_CAB dont la grandeur associée est une humidité relative RH_CAB à l'intérieur de la voiture 100 au voisinage du pare-brise 110 (typiquement à une distance du pare-brise 110 inférieure ou égale à 10 mm). A partir dudit signal S_RH_CAB, le risque RI de condensation d'humidité sur la surface intérieure du pare-brise 110 peut être évalué en considérant un indicateur de risque I2_RI égal à ladite grandeur RH_CAB. Plus particulièrement, on considère par exemple que :

- si I2_RI est supérieur à une première valeur RH_SUP, le risque RI est égal à 100% ;
- si I2_RI est inférieur à une deuxième valeur RH_INF (RH_SUP étant supérieure à RH_INF), le risque RI est nul ;
- si I2_RI est compris entre RH_INF et RH_SUP (i.e. RH_INF < I2_RI < RH_SUP), le risque RI s'exprime de la façon suivante :

[Math 2]

$$RI = A' \times \left(\frac{I2\_RI - RH\_INF}{RH\_SUP - RH\_INF}\right)^{n'}$$

expression dans laquelle A' et n' sont deux coefficients donnés.

Suivant des considérations similaires à celles évoquées ci-avant, aucune limitation n'est attachée au choix des paramètres RH_INF, RH_SUP, A' et n', ces derniers étant traditionnellement fixés lors de la fabrication de la voiture 100. Qui plus est, le fait de considérer une telle valeur de RI, lorsque ledit indicateur I2_RI est compris entre RH_INF et RH_SUP, ne constitue qu'une variante d'implémentation de l'invention, toute autre variante connue de l'homme du métier pouvant être ici utilisée lorsqu'il est considéré que le risque RI est déterminé à partir dudit indicateur de risque I2_RI.

Pour ce qui concerne la valeur seuil VS_RI, celle-ci peut soit être constante, soit être variable dans le temps, aucune limitation n'étant attachée à cet aspect. En règle générale, et tel que cela est considéré dans le mode de réalisation décrit ici, il s'agit d'une valeur constante fixée (par exemple lors de la construction de la voiture 100), mémorisée dans la mémoire non volatile 4_C, et jouant un rôle de seuil au-delà duquel il est considéré que de la buée est susceptible d'apparaître sur le pare-brise 110.

En d'autres termes, il est possible de considérer cette valeur seuil VS_RI comme une contrainte de fonctionnement du système de régulation SYS_C. Pour la suite de la description, on adopte la notation selon laquelle la ou les contraintes de fonctionnement du système de régulation SYS_C forme(nt) un ensemble de contraintes notés « E_CONS ».

Au sens de la présente invention, l'expression « commande prédictive C_PRED » fait référence à une commande de type compensation/correction anticipatrice visant à activer/désactiver les moyens de chauffage MOD_HEAT et/ou activer/désactiver au moins un composant appartenant au système de climatisation HVAC de sorte à réguler la présence de buée sur le pare-brise 110. Une telle commande prédictive relève d'une technique de commande avancée de l'automatique (les acronymes « MPC » ou « MBPC » sont couramment utilisés en anglais pour qualifier cette technique, et correspondent aux expressions « Model (Based) Predictive Control »).

Le principe général de cette technique MPC consiste en l'utilisation d'au moins un modèle alimenté par des signaux. Ledit au moins un modèle permet de décrire l'évolution d'une ou plusieurs grandeurs au sein de l'habitacle de la voiture 100, dont notamment les grandeurs associées aux signaux qui lui sont fournis en entrée, afin d'anticiper l'évolution future des grandeurs en question, et ainsi prévoir quelles sont les commandes les plus appropriées à transmettre aux actionneurs en fonction de cette évolution.

A cet égard, et comme déjà mentionné ci-avant, le modèle considéré pour la détermination de la commande prédictive C_PRED est ledit modèle prédictif MODEL utilisant notamment les signaux de contrôle S_T_WS, S_AH_CAB. Plus particulièrement, dans le mode de réalisation décrit ici, on considère que le modèle prédictif MODEL comporte :

- un premier sous-modèle SS_MODEL_CAB configuré pour modéliser l'évolution de conditions de température et d'humidité (donc en particulier modéliser l'évolution des grandeurs T_WS et AH_CAB) au niveau de la surface intérieure du pare-brise 110.

Ledit premier sous-modèle SS_MODEL_CAB est donc un modèle hygrothermique de la zone située au voisinage du pare-brise 110 au sein de l'habitacle,

- un deuxième sous-modèle SS_MODEL_HVAC configuré pour modéliser l'évolution de conditions de température et d'humidité au sein de l'habitacle du véhicule en raison du fonctionnement d'un système de climatisation HVAC. A cet effet, ledit sous-modèle SS_MODEL_HVAC modélise et simule le fonctionnement des composants du système HVAC.

Tout modèle (i.e. tout ensemble d'équations, typiquement des équations différentielles) apte à modéliser l'évolution de conditions de température et d'humidité au niveau de la surface intérieure du pare-brise 110 (respectivement apte à modéliser l'évolution de conditions de température et d'humidité au sein de l'habitacle du véhicule en raison du fonctionnement d'un système de climatisation HVAC), et connu de l'homme du métier, peut être utilisé ici. Autrement dit, le choix d'un modèle particulier, aussi bien pour ledit premier sous-modèle SS_MODEL_CAB que ledit deuxième sous-modèle SS_MODEL_HVAC, ne constitue qu'une variante d'implémentation de l'invention.

Qui plus est, bien qu'il soit considéré ici que les deux sous-modèles SS_MODEL_CAB, SS_MODEL_HVAC sont intégrés au modèle prédictif MODEL, il importe de noter que la présence dudit deuxième sous-modèle SS_MODEL_HVAC est, au sens de l'invention, optionnelle. Ainsi, rien n'exclut d'envisager d'autres modes de réalisation dans lesquels seul le premier sous-modèle SS_MODEL_CAB est intégré audit modèle prédictif MODEL (ledit premier sous-modèle SS_MODEL_CAB est en effet celui chargé de modéliser l'évolution des grandeurs associées aux signaux de contrôle S_T_WS, S_AH, CAB).

En complément des aspects liés à l'utilisation d'un modèle prédictif, la mise en œuvre d'une technique MPC comporte également, de manière conventionnelle, une optimisation d'une fonction coût F. Ladite fonction coût F vise avant tout, dans le cadre de la présente invention, à permettre la régulation de la présence de buée sur le pare-brise 110.

En pratique, la fonction coût F est construite de sorte à au moins permettre l'évaluation de l'impact de prédictions des grandeurs associées aux signaux de contrôle S_T_WS, S_AH_CAB vis-à-vis de la variation du risque de condensation RI. A cet effet, la fonction coût F peut comporter au moins un terme parmi :

- un écart entre le risque de condensation RI et ladite valeur seuil VS_RI,
- un taux de variation du risque de condensation RI (par « taux de variation », il est fait référence à variation temporelle).

D'une manière générale, les fondements théoriques de la technique MPC sont bien connus de l'homme du métier, et ne sont pas rappelés ici. En outre, la manière dont ladite commande prédictive C_PRED est déterminée par le module de régulation MOD_REG est détaillée ultérieurement au travers de modes de mise en œuvre du procédé de régulation selon l'invention.

Il peut toutefois être déjà noté que, dans le mode de réalisation décrit ici, la commande prédictive C_PRED comporte une pluralité de composantes dédiées au système de climatisation HVAC, à savoir :

- une composante C_PRED_W de commande de vitesse d'un ventilateur (i.e. d'un ventilateur soufflant de l'air au sein de l'habitacle de la voiture électrique 100),
- une composante C_PRED_VC de commande de vitesse d'un compresseur (i.e. du compresseur intégré, de manière conventionnelle, au système de climatisation HVAC),
- une composante C_PRED_PT de commande de puissance d'une résistance chauffante (comme par exemple une résistance chauffante équipant un siège chauffant ou un panneau radiant de la voiture 100),
- une composante C_PRED_PV de commande de position angulaire d'un volet de recyclage d'air.

Outre lesdites composantes dédiées au système de climatisation HVAC, ladite commande C_PRED comporte, dans le présent mode de réalisation, une composante C_PRED_HEAT de commande des moyens de chauffage MOD_HEAT.

Bien entendu, le fait d'envisager ladite pluralité de composantes C_PRED_VV, C_PRED_VC, C_PRED_PT, C_PRED_PV pour ce qui concerne le système HVAC ne constitue qu'une variante d'implémentation de l'invention. Ainsi, rien n'exclut de considérer une partie seulement desdites composantes. Rien n'exclut non plus, en complément ou en alternative, de considérer une ou plusieurs autres composantes associées au système HVAC.

Il est en outre possible d'envisager qu'au moins une composante dédiée au système HVAC ou aux moyens de chauffage MOD_HEAT est une composante nulle. Dit encore autrement, l'invention couvre des modes selon lesquels seuls les moyens de chauffe MOD_HEAT (respectivement seul un ou plusieurs composants du système HVAC) sont activés par la commande prédictive C_PRED.

Les moyens de communication 5_C permettent notamment au système de régulation SYS_C de transmettre la commande C_PRED vers les moyens de chauffage MOD_HEAT ainsi que vers le système HVAC (en conséquence, les moyens de chauffage MOD_HEAT et le système HVAC sont équipés de moyens de communication configurés pour recevoir la ou les composantes de commande C_PRED qui leur sont dédiées).

Les moyens de communication 5_C permettent également au système de régulation SYS_C de recevoir les signaux de contrôle S_T_WS, S_AH_CAB.

En conséquence, dans le mode de réalisation décrit ici, lesdits moyens de communication 5_C intègrent le module d'obtention MOD_OBT ainsi que le module de transmission MOD_TX. En outre, il est aussi considéré que le module de transmission MOD_TX est intégré au module de régulation MOD_REG, étant entendu que rien n'exclut bien entendu d'envisager qu'il soit externe audit module de régulation MOD_REG. Rien n'exclut non plus d'envisager des modes de réalisation dans lesquels le module d'obtention MOD_OBT est également intégré au module de régulation MOD_REG.

Pour réaliser ces échanges de données, les moyens de communication 5_C comportent par exemple un bus de données informatiques apte à la transmission de la commande C_PRED ainsi qu'à la réception des signaux de contrôle. Selon un autre exemple, les moyens de communication 5_C comportent une interface de communication, filaire ou non filaire, apte à mettre en œuvre tout protocole adapté connu de l'homme du métier (Ethernet, Wifi, Bluetooth, 3G, 4G, 5G, etc.). D'une manière générale, aucune limitation n'est attachée à la manière dont la commande C_PRED est transmise et dont les signaux de contrôle sont obtenus.

Dans le mode de réalisation décrit ici, les signaux de contrôle S_T_WS, S_AH_CAB sont obtenus à partir de mesures, ces mesures étant acquises par des moyens d'acquisition (non représentés sur les figures) équipant la voiture électrique 100. Les mesures réalisées pour obtenir les signaux de contrôle S_T_WS, S_AH_CAB portent sur les grandeurs T_WS, AH_CAB.

Les moyens d'acquisition configurés pour acquérir lesdites mesures comportent, de manière connue, une chaine d'acquisition comprenant un capteur dédié à la mesure de chacune desdites grandeurs T_WS, AH_CAB. Chacun de ces capteurs forme un élément sensible configuré pour fournir un signal électrique en fonction des variations de la grandeur physique à laquelle il est associé. Ladite chaine d'acquisition comporte par exemple aussi une carte d'acquisition configurée pour conditionner le signal électrique fourni par un capteur, par exemple par amplification et/ou filtrage. Lesdits moyens d'acquisition peuvent également comporter, en sortie de la chaine d'acquisition, un convertisseur analogique/numérique configuré pour numériser un signal électrique conditionné.

D'une manière générale, la configuration de tels moyens d'acquisition est bien connue de l'homme du métier et n'est par conséquent détaillée plus avant ici. En particulier, l'homme du métier sait, d'une part, choisir les capteurs adaptés à la mesure des grandeurs T_WS, AH_CAB, et d'autre part les positionner.

En outre, bien qu'il soit considéré ici que les moyens d'acquisition sont externes au système de régulation SYS_C (i.e. le module d'obtention MOD_OBT n'intègre pas les moyens d'acquisition), rien n'exclut d'envisager, suivant une autre variante, des dispositions inverses (i.e. le module d'obtention MOD_OBT intègre les moyens d'acquisition).

Il importe de noter que l'invention n'est pas limitée au cas où les mesures réalisées par les moyens d'acquisition portent directement sur les grandeurs associées aux signaux de contrôle. En particulier, il est possible d'envisager qu'au moins une partie des mesures concernent d'autres grandeurs à partir desquelles les signaux de contrôle peuvent être obtenus, auquel cas ces derniers peuvent être également qualifiés de signaux de synthèse.

A titre d'exemple nullement limitatif, des mesures de température peuvent être acquises au niveau de la surface extérieure du pare-brise 110 (i.e. la surface en contact direct avec l'environnement extérieur de la voiture 100). A partir de ces mesures, et en utilisant un modèle (de type connu en soi) du pare-brise 110 modélisant les effets de conduction thermique, le signal de contrôle S_T_WS peut être obtenu.

Il importe également de noter qu'acquérir des mesures des grandeurs T_WS, AH_CAB permet d'avoir accès, suivant des calculs connus de l'homme du métier, à des valeurs correspondantes de la grandeur RH_CAB, et donc en définitive à une estimation de l'indicateur de risque I2_RI. L'inverse reste également vrai (i.e. estimer I1_RI à partir de mesures de la grandeur RH_CAB). Ces considérations illustrent donc à nouveau que les mesures réalisées par les moyens d'acquisition peuvent porter directement ou indirectement sur les grandeurs associées aux signaux de contrôle obtenus par le module d'obtention MOD_OBT.

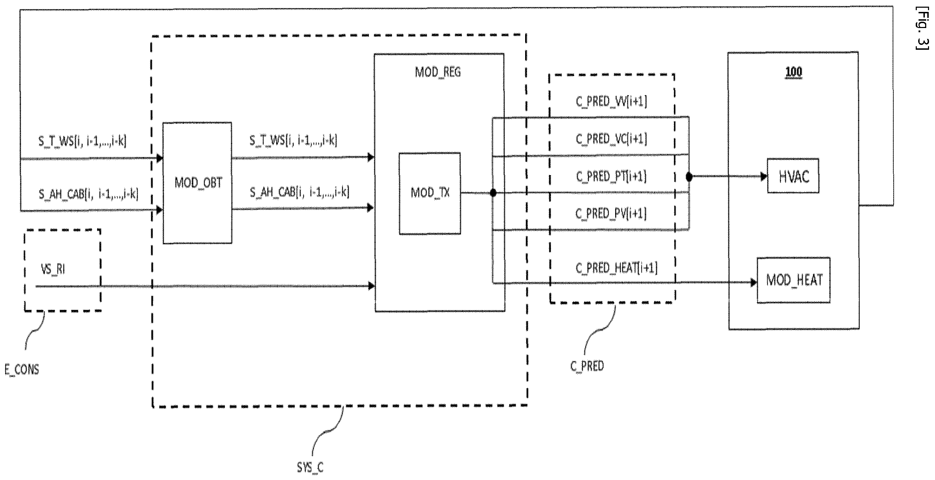

On va désormais décrire un mode particulier de fonctionnement de la boucle de contrôle du procédé de régulation, telle que mise en œuvre au moyen, notamment, du système de régulation SYS_C de la figure 2. La description de ce mode particulier de fonctionnement est réalisée en référence au schéma bloc de la figure 3 qui représente ladite boucle de contrôle (i.e. les signaux échangés entre les différents modules fonctionnels du système de régulation SYS_C).

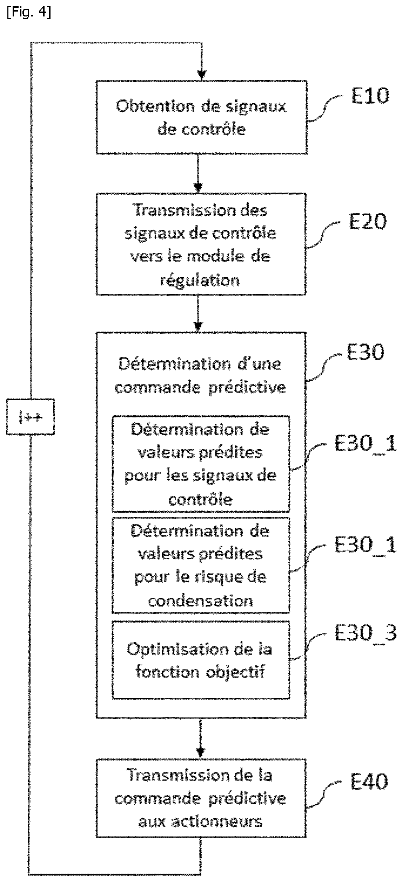

En parallèle de la description du fonctionnement de la boucle de contrôle, on va également décrire, en référence à la figure 4, un mode particulier de mise en œuvre du procédé de régulation.

Pour rappel, il est considéré dans le mode décrit ici que le risque de condensation RI est défini à partir de l'indicateur de risque I1_RI mentionné ci-avant.

Pour la description des figures 3 et 4, on considère une itération courante de la boucle de contrôle. Cette itération courante est indexée au moyen de l'indice entier « i » (en conséquence, l'itération qui succède immédiatement à l'itération courante est quant à elle indexée par l'indice « i+1 », et ainsi de suite).

On considère également que la boucle de contrôle est itérée suivant une période fixe, par exemple une période de 1 seconde. On note cependant qu'une telle période de 1 seconde ne constitue en aucun cas une limitation de l'invention, et rien n'exclut d'envisager une autre période, comme par exemple une période inférieure à 1 seconde.

Aussi, pour cette itération courante, et comme mentionné ci-avant, chaque signal de contrôle comporte des valeurs passées et une valeur courante de la grandeur qui lui est associée. Ainsi chaque signal de contrôle S_X (X pouvant être T_WS ou AH_CAB dans le présent mode de réalisation) comporte une composante S_X[i] (valeur courante) mais aussi des composantes S_X[i-1],...,S_X[i-k], où k est un nombre entier déterminé définissant la taille d'un historique de valeurs passées. Pour désigner l'ensemble de ces valeurs courante et passées S_X[i], S_X[i-1],...,S_X[i-k], on utilise encore l'écriture compacte S_X[i, i-1,...,i-k].

Il est à noter que la prise en compte de valeurs passées pour chacun des signaux de contrôle S_T_WS, S_AH_CAB est une démarche conventionnelle dans le cadre de la détermination d'une commande prédictive. En outre, on comprend bien entendu que ces valeurs passées correspondent à des valeurs qui ont été considérées comme courantes lors de précédentes itérations de la boucle de contrôle. Ces valeurs passées sont mémorisées, à mesure que la boucle de contrôle est itérée, par des moyens de mémorisation dédiés (ex. : mémoire non volatile 4_C du système de régulation SYS_C, serveur dédié externe au système de régulation SYS_C, etc.).

Tel qu'illustré par la figure 3, les signaux de contrôle S_T_WS, S_AH_CAB sont obtenus (réceptionnés) par le module d'obtention MOD_OBT. Cela fait l'objet d'une étape E10 du procédé de régulation, comme illustré par la figure 4.

Les signaux de contrôle S_T_WS, S_AH_CAB ainsi obtenus sont alors transmis par le module d'obtention MOD_OBT vers le module de régulation MOD_REG au cours d'une étape E20 du procédé de régulation.

Sur réception desdits signaux de contrôle S_T_WS, S_AH_CAB, et également à partir de la valeur seuil VS_RI extraite de la mémoire non volatile 4_C, le module de régulation MOD_REG détermine la commande prédictive C_PRED. Cela fait l'objet d'une étape E30 du procédé de régulation, comme illustré par la figure 4.

Pour rappel, dans le présent mode de mise en œuvre, la commande prédictive C_PRED comporte une pluralité de composantes pour l'itération de rang i+1, à savoir :

- des composantes C_PRED_W[i+1], C_PRED_VC[i+1], C_PRED_PT[i+1], C_PRED_PV[i+1] destinées au système de climatisation HVAC,
- une composante C_PRED_HEAT[i+1] destinée aux moyens de chauffage MOD_HEAT.

La commande prédictive C_PRED est ensuite transmise, grâce au module de transmission MOD_TX, aux moyens de chauffage MOD_HEAT ainsi qu'au système de climatisation HVAC pour réguler le risque de condensation sur le pare-brise 110. Cela fait l'objet d'une étape E40 du procédé de régulation, comme illustré par la figure 4.

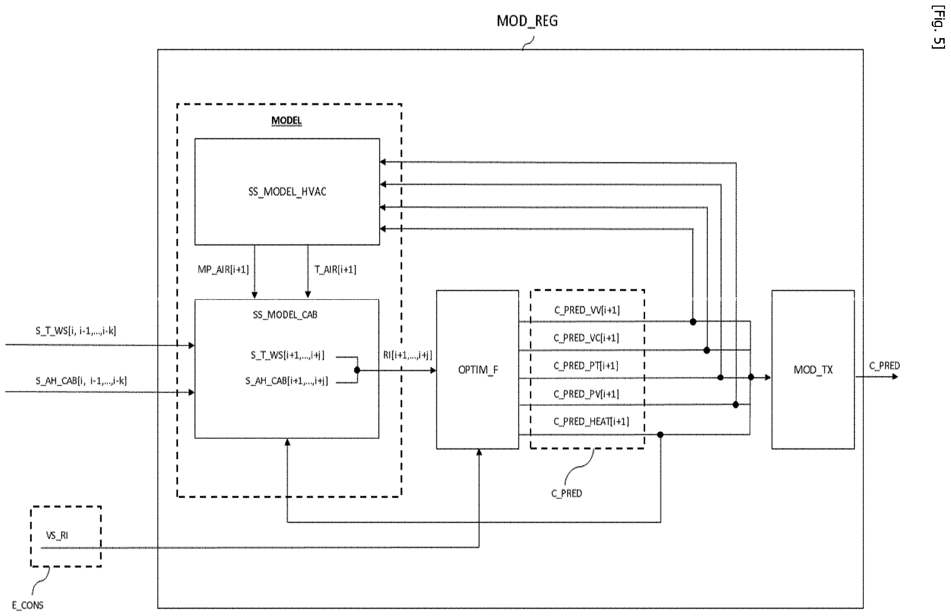

La figure 5 est une représentation schématique plus détaillée du module de régulation MOD_REG appartenant au système de régulation SYS_C utilisé pour le fonctionnement de la boucle de contrôle de la figure 3. Les détails de mise en œuvre de l'étape E30, exécutée par le module de régulation REG de la figure 5, sont également représentées dans la figure 4.

Pour rappel, on considère ici à titre nullement limitatif que le modèle prédictif MODEL utilisé par le module de régulation MOD_REG est formé par deux sous-modules, à savoir lesdits premier et deuxième sous-modules SS_MODEL_CAB, S_MODEL_HVAC.

Tel qu'illustré par la figure 5, ledit sous-modèle SS_MODEL_CAB reçoit tout d'abord en entrée, suite à l'exécution de l'étape 20, les signaux de contrôle S_T_WS, S_AH_CAB.

Le sous-modèle SS_MODEL_CAB détermine alors, au cours d'une sous-étape E30_1 de l'étape E30 du procédé de régulation, des données S_T_WS[i+1],...,S_T_WS[i+j], ainsi que des données S_AH_CAB[i+1],..., S_AH_CAB[i+j]. Ces données correspondent à des valeurs prédites sur un horizon temporel futur de taille j pour chacune des grandeurs T_WS, AH_CAB associées auxdits signaux de contrôle S_T_WS, S_AH_CAB.

Il est à noter que le fait de considérer des prédictions desdites grandeurs T_WS, AH_CAB sur un horizon temporel futur est une démarche conventionnelle dans la mise en œuvre d'une technique MPC. De plus, aucune limitation n'est attachée à la taille dudit horizon temporel futur (i.e. à la valeur de l'entier j), celle-ci pouvant être choisie suivant des considérations bien connues de l'homme du métier (exemple : temps d'exécution de la boucle de contrôle, précision de la commande prédictive C_PRED, etc.).

A partir des données déterminées au cours de la sous-étape E30_1, le sous-modèle SS_MODEL_CAB effectue, dans le mode de mise en œuvre décrit ici et pour chaque pas de temps m de l'horizon temporel futur (i.e. pour chaque entier m compris entre i+1 et i+j) :

- un calcul de l'indicateur de risque I1_RI[m],

- une détermination, sur la base l'indicateur de risque I1_RI[m] calculé, d'un risque de condensation RI[m] associé.

Le risque de condensation RI déterminé par le sous-modèle SS_MODEL_CAB comporte donc plusieurs composantes RI[i+1],...,RI[i+k], les étapes de calcul et de détermination décrites ci-avant pour obtenir ces composantes étant regroupées dans une sous-étape E30_2 de l'étape E30 du procédé de régulation.

Les composantes RI[i+1],...,RI[i+k] (= RI[i+1,...,i+j] sur la figure 5), ainsi que la valeur seuil VS_RI de l'ensemble de contraintes E_CONS, sont ensuite utilisées pour réaliser l'optimisation de la fonction coût F. Cette optimisation fait l'objet d'une sous-étape E30_3 de l'étape E30 du procédé de régulation, comme illustré par la figure 4, et est également représentée de manière symbolique au moyen d'un bloc fonctionnel référencé « OPTIM_F » sur la figure 5 (un tel bloc à une fonction de solveur pour la fonction coût F).

Tout algorithme d'optimisation connu de l'homme du métier peut être mise en œuvre ici, et le choix d'un algorithme d'optimisation particulier ne constitue qu'une variante d'implémentation de l'invention.

Il est à noter que l'optimisation de la fonction coût F peut être réalisée en prenant également en compte des données fournies par le sous-modèle SS_MODEL_HVAC, comme par exemple une donnée relative à l'énergie électrique consommée par les composants du système HVAC auxquels la commande prédictive C_PRED est, au moins en partie, destinée. De telles dispositions sont schématiquement représentées dans la figure 5 au moyen d'une flèche reliant ledit sous-modèle SS_MODEL_HVAC au bloc OPTIM_F.

En pratique, l'arrêt de l'algorithme d'optimisation de la fonction coût F est conditionné par un critère d'arrêt. Aucune limitation n'est attachée à la nature de ce critère d'arrêt qui peut par exemple correspondre à un critère de convergence de la métrique utilisée par la fonction coût F (écart entre le risque de condensation RI prédit par le modèle prédictif et ladite valeur seuil VS_RI, taux de variation du risque de condensation RI) et/ou à un temps de calcul ayant atteint un seuil donné et/ou à l'atteinte d'un nombre d'itérations donné pendant lesquelles la meilleure solution n'évolue plus.

L'optimisation de la fonction coût F permet en définitive de générer un vecteur de commandes prédictives comportant autant de composantes que la taille j de l'horizon temporel futur utilisé. En pratique, seule la première composante de ce vecteur (i.e. la composante de rang i+1) est retenue et correspond à ladite commande prédictive C_PRED destinée aux actionneurs.

Il est à noter que les composantes de la commande prédictive C_PRED, outre le fait d'être transmises vers les moyens de chauffage MOD_HEAT et le système de climatisation HVAC, peuvent également servir à :

- la mise en œuvre des calculs effectués par chacun desdits sous-modèles SS_MODEL_CAB, SS_MODEL_HVAC, et/ou
- la mise à jour de paramètres de chacun desdits modèles SS_MODEL_CAB, SS_MODEL_HVAC.

A cet effet, et tel qu'illustré par la figure 5, les composantes C_PRED_W[i+1], C_PRED_VC[i+1], C_PRED_PT [i+1], C_PRED_PV[i+1] sont également transmises au sous-modèle SSMODEL_HVAC. La composante C_PRED_HEAT [i+1] est quant à elle également transmise au sous-modèle SS_MODEL_CAB.

Par ailleurs, une fois les composantes de la commande C_PREP transmis auxdits sous-modèles SS_MODEL_CAB, SS_MODEL_HVAC, des données supplémentaires peuvent être générées par ledit sous-modèle SS_MODEL_HVAC et transmises au sous-modèle SS_MODEL_CAB. A titre d'exemple, et tel qu'illustré par la figure 5, lesdites données supplémentaires comportent une valeur MP_AIR[i+1] de débit d'air du système de climatisation HVAC, ainsi qu'une valeur T_AIR[i+1] de température de l'air injecté dans l'habitacle par le système de climatisation HVAC. De telles données supplémentaires permettent avantageusement au sous-modèle SS_MODEL_CAB d'affiner ses prédictions pour la prochaine itération de la boucle de contrôle.

L'invention a été décrite jusqu'à présent en considérant que le procédé de régulation est mis en œuvre à partir des seuls signaux de contrôle (deux signaux de contrôle S_T_WS, S_AH, CAB ou bien un seul signal de contrôle S_RH_CAB). L'invention n'est toutefois pas limitée par de telles dispositions, et couvre en effet d'autres modes de réalisation dans lesquels encore d'autres signaux, en complément desdits signaux de contrôle, sont utilisés pour la mise en œuvre du procédé de régulation.

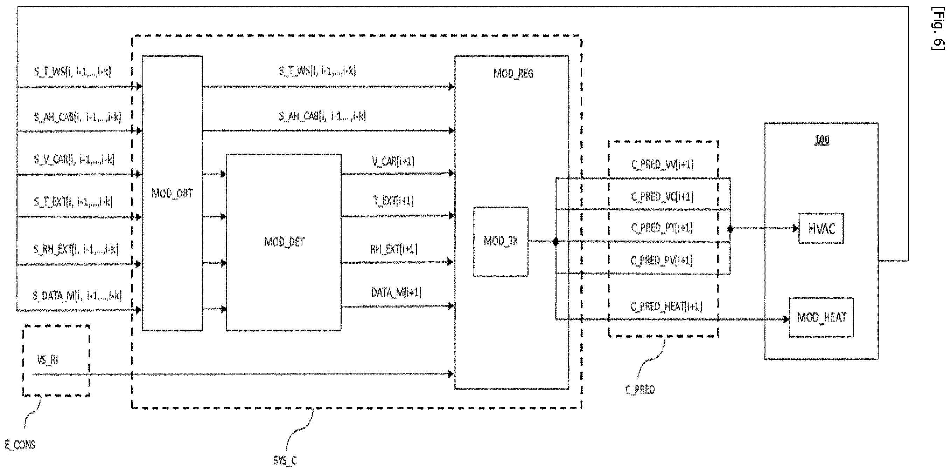

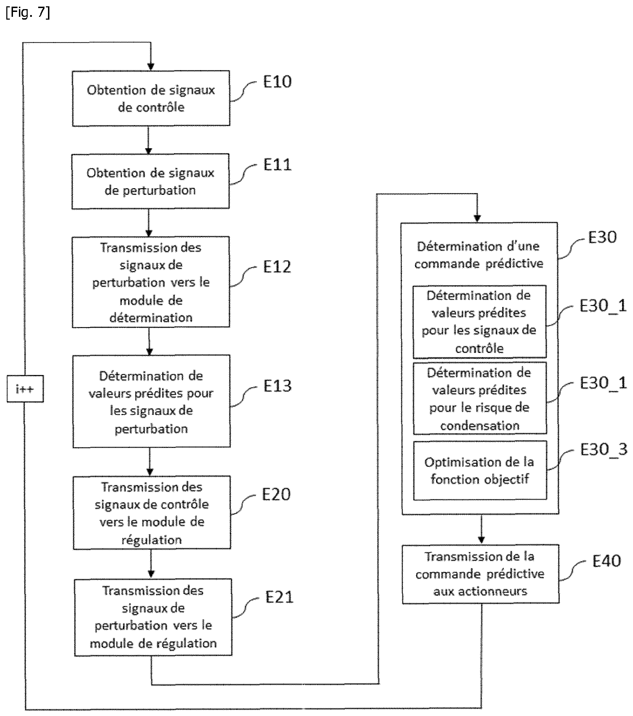

La figure 6 représente schématiquement un autre mode particulier de fonctionnement de la boucle de contrôle. La figure 7 représente, sous forme d'ordinogramme, un mode particulier de mise en œuvre du procédé de régulation intégrant la boucle de contrôle de la figure 6.

Les étapes du procédé de régulation de la figure 7 comportent les étapes E10, E20, E30 et E40 déjà décrites ci-avant en référence à la figure 4, mais également, à titre nullement limitatif, les sous-étapes E30_1, E30_2 et E30_3 décrites ci-avant en référence à la figure 5.

Dans le mode de la figure 6, le module d'obtention MOD_OBT est configuré pour recevoir, en complément des signaux de contrôle S_T_WS, S_AH_CAB, une pluralité de signaux, dits « signaux de perturbation », dont :

- un signal S_V_CAR dont la grandeur associée est une vitesse V_CAR de la voiture 100,
- un signal S_T_EXT dont la grandeur associée est une température extérieure T_EXT à la voiture 100,
- un signal S_RH_EXT dont la grandeur associée est une humidité relative RH_EXT extérieure à la voiture 100,
- un signal S_DATA_M dont la grandeur associée est une donnée M de prédiction météorologique (pluviométrie, ensoleillement, etc.).

De manière similaire à ce qui a été décrit pour les signaux de contrôle S_T_WS, S_AH, CAB, chaque signal de perturbation S_V_CAR, S_T_EXT, S_RH_EXT, S_DATA_M comporte des valeurs passées et une valeur courante de la grandeur qui lui est associée.

L'obtention desdits signaux de perturbation S_V_CAR, S_T_EXT, S_RH_EXT, S_DATA_M par le module d'obtention MOD_OBT fait l'objet d'une étape E11 du procédé de régulation, comme illustré en figure 7. L'ordre dans lequel les étapes E10 et E11 sont mises en œuvre n'est pas limitatif de l'invention. Par exemple, les étapes E10 et E11 peuvent être mises en œuvre en parallèle.

Il est à noter que le fait de considérer lesdits signaux de perturbation S_V_CAR, S_T_EXT, S_RH_EXT, S_DATA_M ne constitue qu'une variante d'implémentation de l'invention. Ainsi, rien n'exclut d'envisager, en complément ou en remplacement d'un ou plusieurs desdits signaux S_V_CAR, S_T_EXT, S_RH_EXT, S_DATA_M, encore d'autres signaux de perturbation, comme par exemple :

- un signal dont la grandeur associée est un nombre de personnes dans le véhicule,
- un signal dont la grandeur associée est un taux de dioxyde de carbone présent dans l'habitacle,
- un signal dont la grandeur associée est une humidité absolue extérieure à la voiture 100,
- un signal dont la grandeur associée est une puissance solaire absorbée par ledit au moins un vitrage et/ou par l'habitacle de la voiture 100.

D'une manière générale, aucune limitation n'est attachée quant au nombre et à la nature des signaux de perturbation pouvant être envisagés.

Dans le mode de la figure 6, le système de régulation SYS_C comporte également un module de détermination MOD_DET configuré pour déterminer, à partir des signaux de perturbation S_V_CAR, S_T_EXT, S_RH_EXT, S_DATA_M, au moins une valeur prédite pour chacune des grandeurs V_CAR, T_EXT, S_RH_EXT, DATA_M.

Par exemple, et tel qu'illustré par la figure 6, le nombre de valeurs prédites pour chaque grandeur V_CAR, T_EXT, S_RH_EXT, DATA_M est égal à j, c'est-à-dire au nombre de pas de temps considéré pour l'horizon temporel futur utilisé par le module de régulation MOD_REG lors de la détermination de la commande prédictive C_PRED. Rien n'exclut cependant d'envisager un nombre différent de j, par exemple inférieur à j, pour les valeurs prédites pour chacune des grandeurs V_CAR, T_EXT, S_RH_EXT, DATA_M.

Suivant des considérations similaires à celles évoquées ci-avant concernant les sous-modèles SS_MODEL_CAB, SS_MODEL_HVAC, tout modèle (i.e. tout ensemble d'équations, typiquement des équations différentielles) apte à modéliser l'évolution des grandeurs V_CAR, T_EXT, S_RH_EXT, DATA_M, et connu de l'homme du métier, peut être utilisé ici. Autrement dit, le choix d'un modèle particulier ne constitue qu'une variante d'implémentation de l'invention.

La détermination des valeurs prédites pour chacune des grandeurs V_CAR, T_EXT, S_RH_EXT, DATA_M par le module de détermination MOD_DET fait l'objet d'une étape E13 du procédé de régulation, comme illustré par la figure 7. Cette étape E13 est exécutée après que les signaux de perturbation S_V_CAR, S_T_EXT, S_RH_EXT, S_DATA_M soient transmis par le module d'obtention MOD_OBT vers le module de détermination MOD_DET, cette transmission faisant l'objet d'une étape E12 du procédé de régulation.

Les valeurs prédites pour chacune des grandeurs V_CAR, T_EXT, S_RH_EXT, DATA_M sont à leur tour transmises au module de régulation MOD_REG au cours d'une étape E21 du procédé de régulation. L'ordre dans lequel les étapes E20 et E21 sont mises en œuvre n'est pas limitatif de l'invention. Par exemple, les étapes E20 et E21 peuvent être mises en œuvre en parallèle.

Dans le mode de la figure 6, lors de l'étape E30 de détermination de la commande C_PRED, le modèle prédictif MODEL (plus particulièrement ici le sous-modèle SS_MODEL_CAB) utilise, en plus des signaux de contrôle S_T_WS, S_AH_CAB, les valeurs prédites pour chacune des grandeurs V_CAR, T_EXT, S_RH_EXT, DATA_M.

Le fait de prendre en compte les valeurs prédites pour chacune des grandeurs V_CAR, T_EXT, S_RH_EXT, DATA_M permet avantageusement d'affiner (i.e. d'enrichir) les modèles utilisés pour la détermination de la commande prédictive C_PRED, et donc a fortiori d'augmenter encore la précision de régulation mise en œuvre.

L'invention a également été décrite jusqu'à présent en considérant que la fonction coût F est optimisée, lors de la détermination de la commande prédictive C_PRED, en tenant uniquement compte de la régulation de la présence de buée sur le pare-brise 110. L'invention n'est toutefois pas limitée par de telles dispositions, et couvre en effet d'autres modes de réalisation dans lesquels la fonction coût F peut encore tenir compte d'autres aspects.

Par exemple, la fonction coût F peut comporter une pondération d'au moins un terme représentatif d'un critère d'utilisation de la voiture 100. Ledit au moins un critère d'utilisation peut comporter au moins l'un parmi :

- un critère CRIT_1 relatif à une absence de givre sur le pare-brise 110,
- un critère CRIT_2 relatif à un confort thermique au sein de l'habitacle,
- un critère CRIT_3 relatif à une consommation d'énergie électrique embarquée dans la voiture 100 et utilisée pour le fonctionnement des moyens de chauffe MOD_HEAT et du système de climatisation HVAC,
- un critère CRIT_4 relatif à un taux de dioxyde de carbone au sein de l'habitacle,
- un critère CRIT_5 relatif à un niveau de bruit au sein de l'habitacle (exemple : bruit généré par un ventilateur du système de climatisation HVAC, le niveau de bruit pouvant donc être modulé en modifiant la vitesse dudit ventilateur).

Aucune limitation n'est attachée au nombre de critères d'utilisation (et donc au nombre de termes à pondérer) pouvant être considéré parmi lesdits critères CRIT_p (p étant un indice entier compris entre 1 et 5). De manière plus générale, rien n'exclut d'envisager encore un ou plusieurs autres critères d'utilisation en complément ou en alternative à tout ou partie des critères CRIT_p.

En conséquence, dans de tels modes de réalisation, la fonction coût F admet une formulation général du type F = F_D + F_CRIT, où :

- F_D est un terme représentatif de la seule contribution de la régulation de la présence de buée sur la pare-brise 110 à la détermination de la commande prédictive C_PRED,
- F_CRIT est un terme représentatif de la contribution du ou des critères d'utilisation pris en compte dans la détermination de la commande prédictive C_PRED.

A titre purement illustratif, on peut considérer l'exemple selon lequel les critères d'utilisation CRIT_2 et CRIT_3 sont pris en compte. Pour ce qui concerne plus spécifiquement le critère CRIT_2, on considère que les conditions de confort sont relatives non seulement à la température au sein de l'habitacle mais également à l'humidité absolue au sein dudit habitacle. Dès lors, le critère CRIT_2 se rapporte au confort thermique au sein de l'habitacle.

De manière connue en soi, le confort thermique au sein de l'habitacle peut être évalué de différentes manières. Dans l'exemple décrit ici, on considère de manière nullement limitative que l'évaluation du confort thermique s'effectue en calculant une différence entre une température T_CAB dudit habitacle et une température de consigne T_CAB_SET choisie par un utilisateur de la voiture 100 (exemple : le conducteur de la voiture 100 fixe la température T_CAB_SET à 20°C au sein de l'habitacle). L'obtention de ladite température de consigne T_CAB_SET s'effectue par exemple via ledit module d'obtention MOD_OBT (exemple : interface de saisie manuelle intégrée audit module d'obtention MOD_OBT). Qui plus est, la manière dont la température T_CAB est régulée peut non seulement dépendre de ladite consigne T_CAB_SET mais aussi, par exemple, d'une sélection d'un mode économique de régulation de température.

D'autres modes d'évaluation du confort thermique peut bien entendu encore être envisagés, comme par exemple une évaluation réalisée grâce à un modèle de Fanger, encore appelé modèle PMV/PPD (acronymes des expressions « Predicted Mean Vote » et « Predicted Percentage of Disatisfied » dans la littérature anglo-saxonne). D'une manière générale, aucune limitation n'est attachée à la manière dont le confort thermique est évalué au sens de la présente invention.

Dans l'exemple de réalisation décrit ici, les pondérations des critères d'utilisation CRIT_2, CRIT_3 peuvent s'exprimer de la manière suivante :

$$F\_CRIT = w2 * F\_CRIT\_2 + w3 * F\_CRIT\_3,$$

expression dans laquelle :

- w2 et w3 sont des poids de pondération (i.e. des nombres réels positifs ou nuls),
- F_CRIT _2 est un terme représentatif de la contribution du critère d'utilisation CRIT_2 au terme F_CRIT,
- F_CRIT_3 est un terme représentatif de la contribution du critère d'utilisation CRIT_3 au terme F_CRIT.

Il est à noter que le terme « pondérations » couvre toutes les possibilités de combinaison entre F_CRIT_2 et F_CRIT_3. Autrement dit, rien n'exclut d'envisager les alternatives suivantes :

- les poids w2 et w3 sont tous deux strictement positifs, ou
- w2 (respectivement w3) est strictement positif, w3 (respectivement w2) étant quant à lui nul.

Il peut également être noté que la prise en considération d'un ou plusieurs critère d'utilisation dans la fonction coût F a un impact en termes de signaux destinés à être obtenus par le module d'obtention MOD_OBT et/ou de contraintes de fonctionnement du système de régulation SYS_C dont il convient de tenir compte au niveau de l'optimiseur OPTIM_F.

Ainsi, en reprenant l'exemple précédent dans lequel la fonction coût F admet pour expression :

$$F = F\_D + w2 * F\_CRIT\_2 + w3 * F\_CRIT\_3,$$

on comprend que :

- pour ce qui concerne le critère CRIT_2, le module d'obtention MOD_OBT obtient non seulement, via des mesures appropriées, un signal de contrôle S_T_CAB dont la grandeur associée est la température T_CAB de l'habitacle, mais également la valeur T_CAB_SET qui constitue une contrainte appartenant à l'ensemble de contraintes E_CONS et qui est fournie en entrée de l'optimiseur OPTIM_F,
- pour ce qui concerne le critère CRIT_3, un signal S_ELEC représentatif d'une puissance électrique maximale disponible pour le fonctionnement desdits moyens de chauffage MOD_HEAT et dudit système de climatisation HVAC, et appartenant à l'ensemble de contraintes E_CONS, est fourni en entrée de l'optimiseur OPTIM_F.

D'une manière générale, pour tout critère d'utilisation susceptible d'être pris en compte dans l'optimisation de la fonction coût F, l'homme du métier sait déterminer la ou les grandeurs (et donc a fortiori le ou les signaux associés) ainsi que la ou les contraintes destinées à être prises en compte.

Enfin, l'invention a également été décrite jusqu'à présent en considérant que les moyens de chauffage MOD_HEAT et le système de climatisation HVAC sont deux entités externes au système de régulation SYS_C. Ces dispositions ne sont toutefois pas limitatives de l'invention, et rien n'exclut de considérer des modes de réalisation dans lesquels les moyens de chauffage MOD_HEAT et/ou le système de climatisation HVAC appartiennent au système de régulation SYS_C.

**Revendications**

1. Procédé de régulation de la présence de buée sur la surface intérieure d'au moins un vitrage (110) d'un véhicule (100), ledit procédé comportant une boucle de contrôle comprenant, lors d'une itération courante, des étapes de :

    - obtention (E10) d'au moins un signal, dit signal de contrôle (S_T_WS, S_AH_CAB), associé à une grandeur et comportant une valeur courante de ladite grandeur, un risque de condensation d'humidité sur la surface intérieure dudit au moins un vitrage pouvant être déterminé à partir de ladite au moins une grandeur,
    - détermination (E30) d'une commande prédictive (C_PRED) d'au moins un actionneur (MOD_HEAT, HVAC) du véhicule de sorte à maintenir ou abaisser ledit risque en-dessous d'une valeur seuil (VS_RI), ladite commande étant déterminée au moyen d'un modèle prédictif (MODEL) dudit risque utilisant ledit au moins un signal de contrôle,
    - transmission (E40) de la commande prédictive audit au moins un actionneur, ledit procédé étant **caractérisé en ce que** ledit signal de contrôle comporte, en plus de la valeur courante de ladite grandeur, également des valeurs passées de ladite grandeur.

2. Procédé selon la revendication 1, dans lequel une pluralité de signaux de contrôle sont obtenus, dont :

    - un signal (S_T_WS) dont la grandeur associée est une température dudit au moins un vitrage (110), et
    - un signal (S_AH_CAB) dont la grandeur associée est une humidité absolue à l'intérieur du véhicule au voisinage dudit au moins un vitrage.

3. Procédé selon la revendication 1, dans lequel un seul signal de contrôle est obtenu, la grandeur associée audit signal de contrôle étant une humidité relative à l'intérieur du véhicule au voisinage dudit au moins un vitrage.

4. Procédé selon l'une quelconque des revendications 1 à 3, dans lequel la détermination dudit risque de condensation, pour un pas de temps donné d'un horizon temporel futur, comporte :

    - une obtention d'une température dudit au moins un vitrage ainsi que d'un point de rosée de l'habitacle,
    - un calcul d'un écart entre ladite température dudit au moins un vitrage et ledit point de rosée de l'habitacle,
    - une comparaison dudit écart avec au moins une valeur donnée.

5. Procédé selon l'une quelconque des revendications 1 à 4, dans lequel la détermination dudit risque de condensation, pour un pas de temps donné d'un horizon temporel futur, comporte :

- une obtention d'une humidité relative à l'intérieur du véhicule au voisinage dudit au moins un vitrage,
- une comparaison de ladite humidité relative avec au moins une valeur donnée.

6. Procédé selon l'une quelconque des revendications 1 à 5, dans lequel ledit au moins actionneur comporte des moyens de chauffage (MOD_HEAT) dudit au moins un vitrage (110) et/ou au moins un actionneur d'un système de climatisation (HVAC) de l'habitacle du véhicule (100) parmi : un ventilateur, un compresseur, une résistance chauffante, un volet de recyclage d'air.

7. Procédé selon l'une quelconque des revendications 1 à 6, dans lequel le modèle prédictif (MODEL) est configuré pour modéliser :

- l'évolution de conditions de température et d'humidité au niveau de la surface intérieure dudit au moins un vitrage (110), et
- l'évolution de conditions de température et d'humidité au sein de l'habitacle du véhicule en raison du fonctionnement d'un système de climatisation dudit habitacle.

8. Procédé selon l'une quelconque des revendications 1 à 7, ledit procédé comportant également une étape d'obtention (E11) d'au moins un signal, dit « signal de perturbation », associé à une grandeur et comportant des valeurs passées et une valeur courante de ladite grandeur, ledit au moins un signal de perturbation étant au moins l'un parmi :

- un signal dont la grandeur associée est un nombre de personnes dans le véhicule,
- un signal dont la grandeur associée est un taux de dioxyde de carbone présent dans l'habitacle,
- un signal (S_V_CAR) dont la grandeur associée est une vitesse du véhicule,
- un signal (S_T_EXT) dont la grandeur associée est une température extérieure au véhicule,
- un signal (S_RH_EXT) dont la grandeur associée est une humidité relative ou absolue extérieure au véhicule,
- un signal (S_DATA_M) dont la grandeur associée est une donnée de prédiction météorologique,
- un signal dont la grandeur associée est une puissance solaire absorbée par ledit au moins un vitrage et/ou par l'habitacle du véhicule,
le procédé comportant en outre une étape de détermination (E13), à partir dudit au moins un signal de perturbation, d'au moins une valeur prédite de la grandeur associée audit au moins signal de perturbation,
le modèle prédictif (MODEL) dudit risque de condensation utilisant également ladite au moins valeur prédite lors de la détermination de la commande prédictive (C_PRED) dudit au moins un actionneur (MOD_HEAT, HVAC).

9. Procédé selon l'une quelconque des revendications 1 à 8, dans lequel l'étape de détermination (E30) de la commande prédictive comporte une optimisation d'une fonction coût comportant au moins un terme parmi :

- un écart entre le risque de condensation prédit par le modèle prédictif et ladite valeur seuil (VS_RI),
- un taux de variation du risque de condensation.

10. Procédé selon la revendication 9, dans lequel la fonction coût comporte également une pondération d'au moins un terme représentatif d'un critère d'utilisation du véhicule, ledit au moins un critère d'utilisation comportant au moins l'un parmi :

- un critère relatif à une absence de givre sur ledit au moins un vitrage,
- un critère relatif à un confort thermique au sein de l'habitacle,
- un critère relatif à une consommation d'énergie électrique embarquée dans le véhicule et utilisée pour le fonctionnement dudit au moins un actionneur,
- un critère relatif à un taux de dioxyde de carbone au sein de l'habitacle,
- un critère relatif à un niveau de bruit au sein de l'habitacle.

11. Programme d'ordinateur (PROG_C) comportant des instructions pour la mise en œuvre d'un procédé de régulation selon l'une quelconque des revendications 1 à 10 lorsque ledit programme est exécuté par un ordinateur.

12. Support d'enregistrement lisible par un ordinateur sur lequel est enregistré un programme d'ordinateur selon la revendication 11.

13. Système (SYS_C) de régulation de la présence de buée sur au moins un vitrage (110) d'un véhicule (100), ledit système comportant des moyens configurés pour mettre en œuvre un procédé de régulation selon l'une quelconque des revendications 1 à 10.

14. Véhicule (100) comportant un système de régulation selon la revendication 13.

15. Véhicule (100) selon la revendication 14, ledit véhicule comportant au moins un moteur électrique pour se mouvoir.

**Patentansprüche**

1. Verfahren zum Regeln des Vorhandenseins von Beschlag auf der Innenoberfläche mindestens einer Verglasung (110) eines Fahrzeugs (100), wobei das Verfahren eine Steuerschleife beinhaltet, umfassend, bei einer laufenden Iteration, die Schritte:

   - Erhalten (E10) mindestens eines Signals, genannt Steuersignal (S_T_WS, S_AH_CAB), das einer Größe zugeordnet ist und einen aktuellen Wert der Größe beinhaltet, wobei ein Risiko der Kondensation von Feuchtigkeit auf der Innenoberfläche der mindestens einen Verglasung aus der mindestens einen Größe bestimmt werden kann,
   - Bestimmen (E30) einer prädiktiven Regelung (C_PRED) mindestens eines Stellglieds (MOD_HEAT, HVAC) des Fahrzeugs, um das Risiko unterhalb eines Schwellenwerts (VS_RI) zu halten oder zu senken, wobei die Regelung mittels eines prädiktiven Modells (MODEL) des Risikos bestimmt wird, das das mindestens eine Steuersignal verwendet,
   - Übertragen (E40) der prädiktiven Regelung an mindestens ein Stellglied, wobei das Verfahren **dadurch gekennzeichnet ist, dass** das Steuersignal zusätzlich zu dem aktuellen Wert der Größe auch vergangene Werte der Größe beinhaltet.

2. Verfahren nach Anspruch 1, wobei eine Vielzahl von Steuersignalen erhalten werden, wobei:

   - ein Signal (S_T_WS), dessen zugeordnete Größe eine Temperatur der mindestens einen Verglasung (110) ist, und
   - ein Signal (S_AH_CAB), dessen zugeordnete Größe eine absolute Feuchtigkeit im Inneren des Fahrzeugs in der Nähe der mindestens einen Verglasung ist.

3. Verfahren nach Anspruch 1, wobei ein einziges Steuersignal erhalten wird, wobei die dem Steuersignal zugeordnete Größe eine relative Feuchtigkeit im Inneren des Fahrzeugs in der Nähe der mindestens einen Verglasung ist.

4. Verfahren nach einem der Ansprüche 1 bis 3, wobei die Bestimmung des Kondensationsrisikos für einen gegebenen Zeitschritt eines zukünftigen Zeithorizonts beinhaltet:

   - ein Erhalten einer Temperatur der mindestens einen Verglasung sowie eines Taupunkts des Fahrzeuginnenraums,
   - ein Berechnen einer Abweichung zwischen der Temperatur der mindestens einen Verglasung und dem Taupunkt des Fahrzeuginnenraums,
   - ein Vergleichen der Abweichung mit mindestens einem gegebenen Wert.

5. Verfahren nach einem der Ansprüche 1 bis 4, wobei die Bestimmung des Kondensationsrisikos für einen gegebenen Zeitschritt eines zukünftigen Zeithorizonts beinhaltet:

   - ein Erhalten einer relativen Feuchtigkeit im Inneren des Fahrzeugs in der Nähe der mindestens einen Verglasung,
   - ein Vergleichen der relativen Feuchtigkeit mit mindestens einem gegebenen Wert.

6. Verfahren nach einem der Ansprüche 1 bis 5, wobei das mindestens eine Stellglied Heizmittel (MOD_HEAT) der mindestens einen Verglasung (110) und/oder mindestens ein Stellglied eines Klimatisierungssystems (HVAC) des Fahrzeuginnenraums des Fahrzeugs (100) beinhaltet, darunter: einen Ventilator, einen Kompressor, einen Heizwiderstand, eine Luftumwälzklappe.

7. Verfahren nach einem der Ansprüche 1 bis 6, wobei das prädiktive Modell (MODEL) konfiguriert ist zum Darstellen als Modell:

- der Entwicklung von Temperatur- und Feuchtigkeitsbedingungen in Bezug auf die Innenoberfläche der mindestens einen Verglasung (110), und
- der Entwicklung von Temperatur- und Feuchtigkeitsbedingungen innerhalb des Fahrzeuginnenraums des Fahrzeugs aufgrund des Betriebs einer Klimatisierungssystems des Fahrzeuginnenraums.

8. Verfahren nach einem der Ansprüche 1 bis 7, wobei das Verfahren auch einen Schritt des Erhaltens (E11) mindestens eines Signals, genannt "Störungssignal", beinhaltet, das einer Größe zugeordnet ist und vergangene Werte und einen aktuellen Wert der Größe beinhaltet, wobei das mindestens eine Störungssignal mindestens eines der folgenden ist:

- ein Signal, dessen zugeordnete Größe eine Anzahl von Personen in dem Fahrzeug ist,
- ein Signal, dessen zugeordnete Größe ein Kohlendioxidgehalt ist, der in dem Fahrzeuginnenraum vorhanden ist,
- ein Signal (S_V_CAR), dessen zugeordnete Größe eine Geschwindigkeit des Fahrzeugs ist,
- ein Signal (S_T_EXT), dessen zugeordnete Größe eine Außentemperatur des Fahrzeugs ist,
- ein Signal (S_RH_EXT), dessen zugeordnete Größe eine relative oder absolute Feuchtigkeit außerhalb des Fahrzeugs ist,
- ein Signal (S_DATA_M), dessen zugeordnete Größe eine meteorologische Vorhersagedaten ist,
- ein Signal, dessen zugeordnete Größe eine von der mindestens einen Verglasung und/oder von dem Fahrzeuginnenraum des Fahrzeugs absorbierte Solarleistung ist,
wobei das Verfahren ferner einen Schritt des Bestimmens (E13) aus dem mindestens einen Störungssignal, aus dem mindestens einen vorhergesagten Wert der Größe, die dem mindestens einen Störungssignal zugeordnet ist, beinhaltet,
wobei das prädiktive Modell (MODEL) des Kondensationsrisikos ebenfalls den mindestens einen vorhergesagten Wert bei der Bestimmung der prädiktiven Regelung (C_PRED) des mindestens einen Stellglieds (MOD_HEAT, HVAC) verwendet.

9. Verfahren nach einem der Ansprüche 1 bis 8, wobei der Schritt des Bestimmens (E30) der prädiktiven Regelung eine Optimierung einer Kostenfunktion beinhaltet, die mindestens einen Term unter folgenden beinhaltet:

- eine Abweichung zwischen dem durch das prädiktive Modell vorhergesagten Kondensationsrisiko und dem Schwellenwert (VS_RI),
- eine Änderungsrate des Kondensationsrisikos.

10. Verfahren nach Anspruch 9, wobei die Kostenfunktion ebenfalls eine Gewichtung mindestens eines Terms umfasst, der ein Nutzungskriterium des Fahrzeugs darstellt, wobei das mindestens eine Nutzungskriterium mindestens eines der folgenden beinhaltet:

- ein Kriterium bezüglich einer Abwesenheit von Reif auf der mindestens einen Verglasung,
- ein Kriterium bezüglich eines thermischen Komforts innerhalb des Fahrzeuginnenraums,
- ein Kriterium bezüglich eines Verbrauchs an elektrischer Energie, die in dem Fahrzeug mitgeführt wird und für den Betrieb des mindestens einen Stellglieds verwendet wird,
- ein Kriterium bezüglich eines Kohlendioxidgehalts in dem Fahrzeuginnenraum,
- ein Kriterium bezüglich eines Geräuschpegels innerhalb des Fahrzeuginnenraums.

11. Computerprogramm (PROG_C), das Anweisungen zum Vornehmen eines Verfahren zum Regeln nach einem der Ansprüche 1 bis 10 beinhaltet, wenn das Programm durch einen Computer ausgeführt wird.

12. Speichermedium, das durch einen Computer lesbar ist, auf dem das Computerprogramm nach Anspruch 11 gespeichert ist.

13. System (SYS_C) für die Regelung des Vorhandenseins von Beschlag auf mindestens einer Verglasung (110) eines Fahrzeugs (100), wobei das System Mittel beinhaltet, die zum Vornehmen eines Verfahren zum Regeln nach einem der Ansprüche 1 bis 10 konfiguriert sind.

14. Fahrzeug (100), das ein System für die Regelung nach Anspruch 13 beinhaltet.

15. Fahrzeug (100) nach Anspruch 14, wobei das Fahrzeug mindestens einen Elektromotor zum Fortbewegen beinhaltet.

**Claims**

1. A method for regulating the presence of condensation on the inner surface of at least one glazed unit (110) of a vehicle (100), said method including a control loop comprising, during a current iteration, steps of:

   - obtaining (E10) at least one signal, referred to as a "control signal" (S_T_WS, S_AH_CAB), associated with a quantity and including a current value of said quantity, a risk of moisture condensation on the inner surface of said at least one glazed unit that may be determined from said at least one quantity,
   - determining (E30) a predictive command (C_PRED) for at least one actuator (MOD_HEAT, HVAC) of the vehicle so as to maintain or lower said risk below a threshold value (VS_RI), said command being determined by means of a predictive model (MODEL) of said risk using said at least one control signal,
   - transmitting (E40) the predictive command to said at least one actuator; said method being **characterized in that** said control signal comprises, in addition to the current value of said quantity, also past values of said quantity.

2. The method according to claim 1, wherein a plurality of control signals are obtained, including:

   - a signal (S_T_WS) whose associated quantity is a temperature of said at least one glazed unit (110), and
   - a signal (S_AH_CAB) whose associated quantity is an absolute humidity inside the vehicle in the vicinity of said at least one glazed unit.

3. The method according to claim 1, wherein a single control signal is obtained, the quantity associated with said control signal being a relative humidity inside the vehicle in the vicinity of said at least one glazed unit.

4. The method according to any one of claims 1 to 3, wherein the determination of said condensation risk, for a given time interval of a future time horizon, includes:

   - obtaining a temperature of said at least one glazed unit and of a dew point of the passenger compartment,
   - calculating a gap between said temperature of said at least one glazed unit and said dew point of the passenger compartment,
   - comparing said gap with at least one given value.

5. The method according to any one of claims 1 to 4, wherein the determination of said condensation risk, for a given time interval of a future time horizon, includes:

   - obtaining a relative humidity inside the vehicle in the vicinity of said at least one glazed unit,
   - comparing said relative humidity with at least one given value.

6. The method according to any one of claims 1 to 5, wherein said at least one actuator includes means for heating (MOD_HEAT) said at least one glazed unit (110) and/or at least one actuator of an air conditioning system (HVAC) of the passenger compartment of the vehicle (100) from: a fan, a compressor, a heating resistor, an air recirculation flap.

7. The method according to any one of claims 1 to 6, wherein the predictive model (MODEL) is configured to model:

   - the change in temperature and humidity conditions at the inner surface of said at least one glazed unit (110), and
   - the change in temperature and humidity conditions within the passenger compartment of the vehicle due to the operation of an air-conditioning system of said passenger compartment.

8. The method according to any one of claims 1 to 7, said method also including a step of obtaining (E11) at least one signal, called "disturbance signal", associated with a quantity and including past values and a current value of said quantity, said at least one disturbance signal being at least one of:

   - a signal whose associated quantity is a number of persons in the vehicle,

- a signal whose associated quantity is a carbon dioxide level present in the passenger compartment,
- a signal (S_V_CAR) whose associated quantity is a vehicle speed,
- a signal (S_T_EXT) whose associated quantity is a temperature outside the vehicle,
- a signal (S_RH_EXT) whose associated quantity is a relative or absolute humidity outside the vehicle,
- a signal (S_DATA_M) whose associated quantity is a weather forecast item of data,
- a signal whose associated quantity is a solar power absorbed by said at least one glazed unit and/or by the passenger compartment of the vehicle,
the method further including a step of determining (E13), from said at least one disturbance signal, at least one predicted value of the quantity associated with said at least one disturbance signal,
the predictive model (MODEL) of said condensation risk also using said at least predicted value when determining the predictive command (C_PRED) of said at least one actuator (MOD_HEAT, HVAC).

9. The method according to any one of claims 1 to 8, wherein the step of determining (E30) the predictive command includes an optimization of a cost function including at least one term from:

   - a difference between the condensation risk predicted by the predictive model and said threshold value (VS_RI),
   - a rate of change in the condensation risk.

10. The method according to claim 9, wherein the cost function also includes a weighting of at least one term representative of a vehicle usage criterion, said at least one usage criterion including at least one of:

    - a criterion relating to an absence of frost on said at least one glazed unit,
    - a criterion relating to thermal comfort within the passenger compartment,
    - a criterion relating to electrical energy consumption on board the vehicle and used for the operation of said at least one actuator,
    - a criterion relating to a carbon dioxide level within the passenger compartment,
    - a criterion relating to a noise level within the passenger compartment.

11. A computer program (PROG_C) including instructions for implementing a regulating method according to any one of claims 1 to 10 when said program is executed by a computer.

12. A computer-readable recording medium on which a computer program according to claim 11 is recorded.

13. A system (SYS_C) for regulating the presence of condensation on at least one glazed unit (110) of a vehicle (100), said system including means configured to implement a regulating method according to any one of claims 1 to 10.

14. A vehicle (100) including a system for regulating according to claim 13.

15. The vehicle (100) according to claim 14, said vehicle including at least one electric motor to run on.

[Fig. 1]

[Fig. 2]

[Fig. 3]

[Fig. 4]

Obtention de signaux de contrôle — E10

Transmission des signaux de contrôle vers le module de régulation — E20

Détermination d'une commande prédictive — E30

Détermination de valeurs prédites pour les signaux de contrôle — E30_1

Détermination de valeurs prédites pour le risque de condensation — E30_1

Optimisation de la fonction objectif — E30_3

Transmission de la commande prédictive aux actionneurs — E40

i++

[Fig. 5]

[Fig. 6]

[Fig. 7]

**EP 4 522 435 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3048214 A1